(19)

Europäisches
Patentamt

European
Patent Office

Office européen
des brevets

(11) **EP 2 533 212 A1**

(12) **EUROPEAN PATENT APPLICATION**

(43) Date of publication:
**12.12.2012 Bulletin 2012/50**

(21) Application number: **12171078.4**

(22) Date of filing: **06.06.2012**

(51) Int Cl.:
***G06T 15/20*** (2011.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **10.06.2011 US 201161495436 P**
**14.11.2011 KR 20110118334**

(71) Applicant: **Samsung Electronics Co., Ltd.**
**Suwon-si, Gyeonggi-do, 443-742 (KR)**

(72) Inventors:
• **Hwang, Kyu Young**
**445-735 Gyeonggi-do (KR)**

• **Park, Du-Sik**
**443-470 Gyeonggi-do (KR)**
• **Lee, Ho Young**
**443-768 Gyeonggi-do (KR)**
• **Cho, Yang Ho**
**445-982 Gyeonggi-do (KR)**
• **Baik, Aron**
**137-072 Seoul (KR)**

(74) Representative: **Grootscholten, Johannes A.M.**
**Arnold & Siedsma**
**Sweelinckplein 1**
**2517 GK Den Haag (NL)**

(54) **Reference layer for hole recovery within an output image.**

(57)    An image processing method and apparatus may generate a reference layer about a reference viewpoint. The reference layer may include information used to perform a hole recovery with respect to holes within output images. The information may be generated by warping the reference layer to a viewpoint of an output image.

FIG. 1

**Description**

BACKGROUND

1. Field

One or more embodiments relate to an image processing method and apparatus, and more particularly, to a method and apparatus that may perform hole recovery with respect to a hole within an output image using a reference layer.

2. Description of the Related Art

A three-dimensional (3D) display device may display a 3D image to enhance the sense of realism and the sense of immersion that a viewer experiences.

To provide a 3D effect to a viewer who views an image at various viewpoints, output view images may need to be generated at various viewpoints. An output view image may be generated by interpolating several input view images or by extrapolating a single input view image. When a plurality of output view images is generated using a small number of input view images, there is a need for a method that may process an area that is invisible in an input view image, while being visible in an output view image. Such an area may be referred to as a "hole." In the conventional art, hole filling may be independently performed with respect to each output view image without taking into consideration all available image data. That is, in the conventional art hole restoration is performed independently for each output image thereby necessitating multiple hole restoration procedures.

SUMMARY

The foregoing and/or other aspects are achieved by providing an image processing method, including generating a reference layer about a reference viewpoint using at least one input view, generating an output viewpoint image using the at least one input view, and performing a hole recovery with respect to a hole within the output viewpoint image using the reference layer. Each input view may include an image and disparity information, and the reference layer may include an image and disparity information.
The at least one input view may be a left input view and a right input view, and the reference viewpoint may comprise a viewpoint between a viewpoint of the left input view and a viewpoint of the right input view.

The reference viewpoint may be a center between a viewpoint of the left input view and a viewpoint of the right input view.

The reference viewpoint may be a viewpoint of a center input view in the at least one input view.

The generating of the reference layer may include generating a reference viewpoint image and a reference viewpoint disparity information using the at least one input view, generating a hole map about the reference viewpoint in which information associated with a hole within each output viewpoint image is collected, generating an initial reference layer using the hole map, the reference viewpoint image, and the reference viewpoint disparity information, and generating the reference layer by performing a hole recovery with respect to a hole within the initial reference layer.

The hole map may be generated based on a difference between disparities of pixels included in the reference viewpoint image.

An image of the initial reference layer may be generated by an AND operation between the reference viewpoint image and the hole map.

The hole recovery with respect to the hole within the initial reference layer may be performed using a background adjacent to the hole.

When a first disparity of a first pixel is greater than a second disparity of a second pixel adjacent to left of the first pixel by at least a threshold, pixels starting from right of the first pixel may be set as the hole and the number of the pixels may be proportional to a difference between the first disparity and the second disparity.

When the first disparity of the first pixel is greater than a third disparity of a third pixel adjacent to right of the first pixel by at least a threshold, pixels starting from left of the first pixel may be set as the hole, and the number of the pixels may be proportional to a difference between the first disparity and the third disparity.

The generating of the output viewpoint image may include selecting at least one reference view from the at least one input view, and generating the output viewpoint image by warping a reference view image to an output viewpoint using reference view disparity information.

The performing of the hole recovery may include generating a reference layer image of the output viewpoint by warping the image of the reference layer to the output viewpoint using disparity information of the reference layer, and duplicating, to the hole, an area corresponding to the hole in the reference layer image of the output viewpoint.

A plurality of output viewpoint images may be provided.

The foregoing and/or other aspects are achieved by providing an image processing apparatus, including a reference layer generator to generate a reference layer about a reference viewpoint using at least one input view, an output viewpoint image generator to generate an output viewpoint image using the at least one input view, and a hole recovery unit to perform a hole recovery with respect to a hole within the output viewpoint image using the reference layer. Each input view may include an image and disparity information, and the reference layer may include an image and disparity information.

The reference layer generator may include a reference viewpoint image/disparity information generator to generate a standard viewpoint image and a reference viewpoint disparity information using the at least one input view, a hole map generator to generate a hole map about the reference viewpoint in which information associated with a hole within each output viewpoint image is collected, an initial reference layer generator to generate an initial reference layer using the hole map, the reference viewpoint image, and the reference viewpoint disparity information, and a reference layer generator to generate the reference layer by performing a hole recovery with respect to a hole within the initial reference layer.

The output viewpoint image generator may include a reference view selector to select at least one reference view from the at least one input view, and a reference view warping unit to generate the output viewpoint image by warping a reference view image to an output viewpoint using reference view disparity information.

The hole recovery unit may include a reference layer warping unit to generate a reference layer image of the output viewpoint by warping the image of the reference layer to the output viewpoint using disparity information of the reference layer, and a hole area duplication unit to duplicate, to the hole, an area corresponding to the hole in the reference layer image of the output viewpoint.

The foregoing and/or other aspects are achieved by providing an image processing method, including calculating a reference viewpoint image and a reference viewpoint disparity based on at least one input view image and input disparity, constructing a hole map corresponding to the reference viewpoint based on the reference viewpoint disparity, generating an initial reference layer at the reference viewpoint using the hole map and the reference viewpoint image, generating a reference layer by performing a hole restoration on a hole within the generated initial reference layer, and propagating restored hole information from the reference layer to a hole location of each output viewpoint image.

The foregoing and/or other aspects are achieved by providing method of constructing a hole map for multi-view image data. The method includes aggregating, at a single reference viewpoint, hole information obtained at each of a plurality of different viewpoints and constructing the hole map, including the aggregated hole information, at the single reference viewpoint.

The foregoing and/or other aspects are achieved by providing multi-view display device including an image processing apparatus. The multi-view display device further includes a reference viewpoint image/disparity information generator to calculate a reference viewpoint image and a reference viewpoint disparity based on at least one input view image and input disparity, a hole map generator to construct a hole map at the reference viewpoint based on the reference viewpoint disparity, an initial reference layer generator to generate an initial reference layer at the reference viewpoint using the hole map and the reference viewpoint image and the reference viewpoint disparity, a reference layer generator to generate a reference layer by performing a hole restoration on a hole within the generated initial reference layer, and a hole recovery unit to propagate restored hole information from the reference layer to a hole location of each output viewpoint image.

Additional aspects of embodiments will be set forth in part in the description which follows and, in part, will be apparent from the description, or may be learned by practice of the disclosure.

BRIEF DESCRIPTION OF THE DRAWINGS

These and/or other aspects will become apparent and more readily appreciated from the following description of embodiments, taken in conjunction with the accompanying drawings of which:

FIG. 1 illustrates an image processing method according to an embodiment;
FIG. 2 illustrates a diagram to describe a method of determining a reference viewpoint based on two input views and generating an image and a disparity with respect to the reference viewpoint according to an embodiment;
FIG. 3 illustrates a diagram to describe a method of determining a reference viewpoint based on (2n+1) input views and generating an image and a disparity with respect to the reference viewpoint according to an embodiment;
FIG. 4 illustrates a diagram to describe a process of generating a reference layer and disparity information of the reference layer using a reference viewpoint image and reference viewpoint disparity information according to an embodiment;
FIG. 5 illustrates a diagram to describe a principle of generating a hole map according to an embodiment;
FIG. 6 illustrates a diagram to describe a method of generating a hole map according to an embodiment;

FIG. 7 illustrates a diagram to describe a method of determining the number of pixels set as a hole according to an embodiment;

FIG. 8 illustrates a process of generating a hole map according to an embodiment;

FIG. 9 illustrates a diagram to describe a principle of generating an output viewpoint image and performing a hole recovery with respect to a hole within the output viewpoint image according to an embodiment;

FIG. 10 illustrates a process of generating an output viewpoint image and performing a hole recovery with respect to a hole within the output viewpoint image according to an embodiment;

FIG. 11 illustrates a configuration of an image processing apparatus according to an embodiment; and

FIG. 12 illustrates a block diagram of a multi-view display device including an image processing apparatus according to example embodiments.

## DETAILED DESCRIPTION

Reference will now be made in detail to embodiments, examples of which are illustrated in the accompanying drawings, wherein like reference numerals refer to the like elements throughout. Embodiments are described below to explain the present disclosure by referring to the figures.

Hereinafter, the term "view" may include an image and disparity information associated with the image. The term view may indicate an image having disparity information.

The image of the view may include, for example, two-dimensional (2D) pixels. The disparity information of the view may include a disparity or a disparity value of each pixel. The disparity information may indicate disparities of pixels within the image.

An input view may indicate a view that is used as input information. An output view may indicate a view that is generated based on input views. Among the input views, a view that is used to generate an output view may be referred to as a reference view.

Interpolation may indicate generating of an image between reference views. Extrapolation may indicate generating of an outer image of the reference views.

An output view image may be generated by warping a reference view image according to a viewpoint of an output view based on disparity information of the reference view image.

Here, warping may indicate shifting coordinates of each of pixels within an image based on disparity information of the image. A pixel with a larger disparity may be shifted further than a pixel with a smaller disparity.

Depth and disparity may be inversely correlated through a mutual constant term. Therefore, in the following embodiments, the terms "depth" and "disparity" may be interchangeably used.

Also, an operation of converting the depth to the disparity or converting the disparity to the depth may be added to the following embodiments.

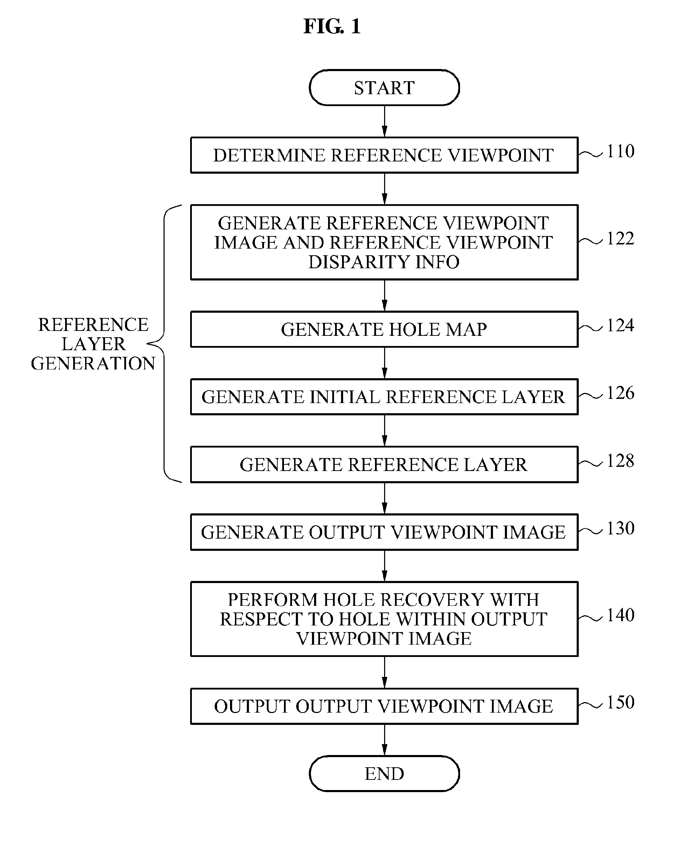

FIG. 1 illustrates an image processing method according to an embodiment.

In operation 110, a reference viewpoint may be determined.

The reference viewpoint may be a viewpoint of a reference viewpoint image, reference viewpoint disparity information, a hole map, and a reference layer. For example, the reference viewpoint may be a viewpoint that is used as a reference for generating the hole map and the reference layer.

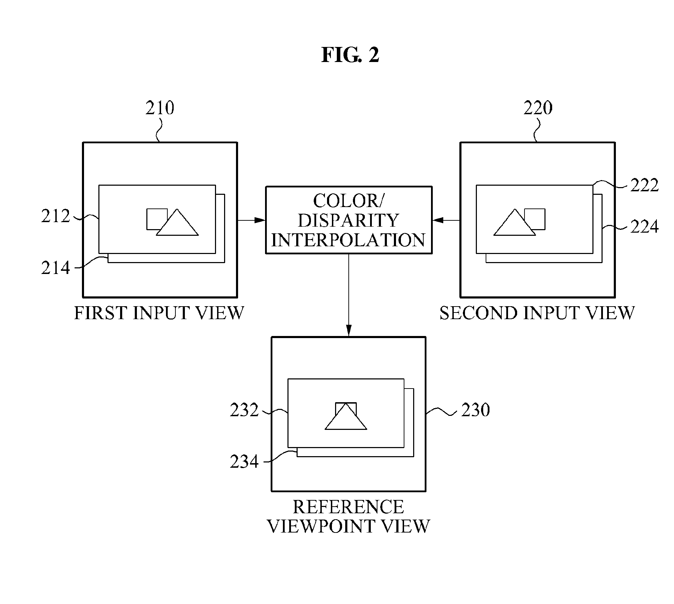

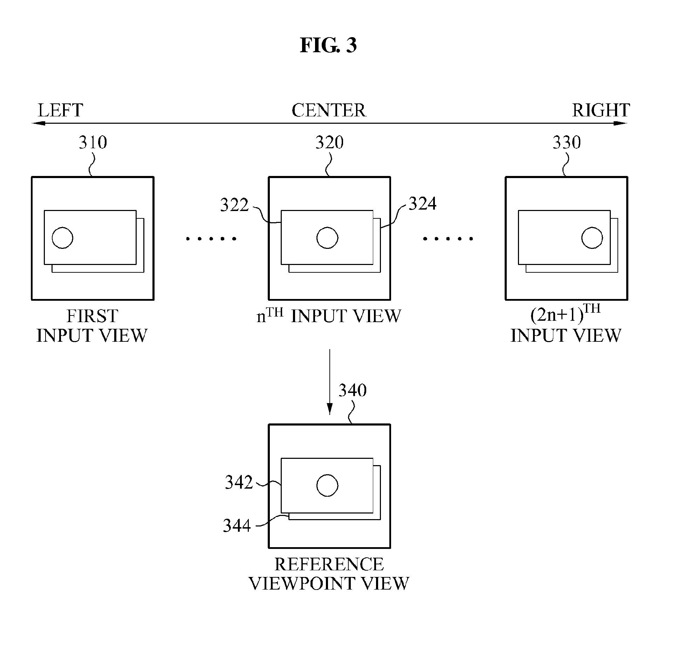

An example of determining the reference viewpoint will be further described later with reference to FIG. 2 and FIG. 3.

In operations 122 through 128, a reference layer, for example, an image of the reference layer and disparity information of the reference layer, with respect to the reference viewpoint, may be generated using at least one input view. Each input view may include an image and disparity information associated with the image.

In operation 122, a reference viewpoint image and reference viewpoint disparity information may be generated using the at least one input view.

The reference viewpoint image and the reference viewpoint disparity information may be used to generate a hole map and the reference layer. The generating of the hole map will be described later.

A viewpoint of a center input view in the at least one input view may be selected as the reference viewpoint. That is, a viewpoint located between other input views in the at least one input view may be selected as the reference viewpoint.

In operation 124, a hole map corresponding to the reference viewpoint may be generated.

The hole map may be generated by collecting, as a reference viewpoint image, information associated with a hole within each viewpoint image. That is, hole information obtained at each of a plurality of different viewpoints may be aggregated at the reference viewpoint image. Here, each viewpoint image may indicate an output image, which will be described later.

In operation 126, an initial reference layer may be generated using the hole map, the reference viewpoint image, and the reference viewpoint disparity information.

In the initial reference layer, a hole component may be generated within the reference viewpoint image, or within the reference viewpoint image and the reference viewpoint disparity information.

In operation 128, the reference layer, for example, the image of the reference layer and the disparity information of the reference layer may be generated by performing a hole recovery with respect to a hole within the initial reference layer. That is, a hole of the initial reference layer may be restored to generate the reference layer.

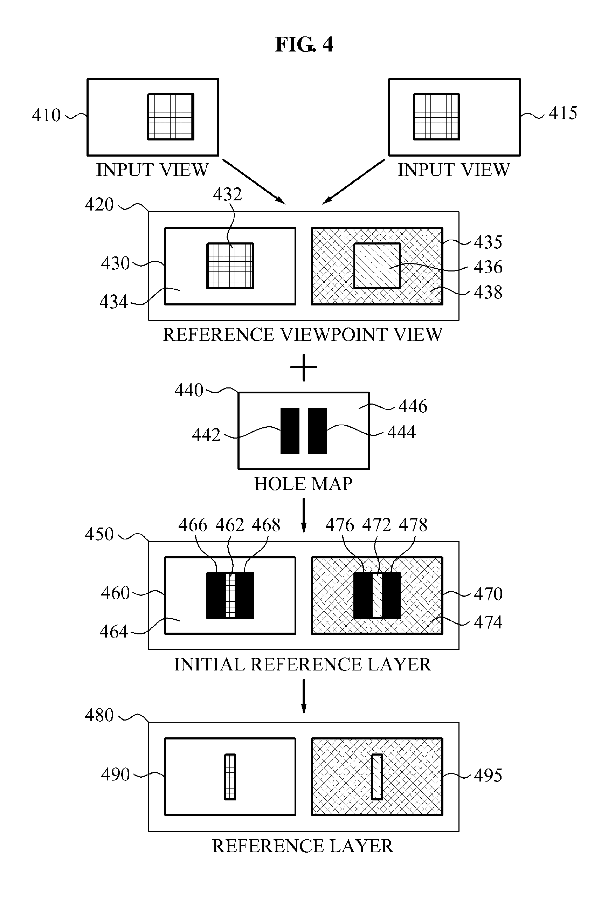

A process of generating a reference layer using a reference viewpoint image and reference viewpoint disparity information will be described later with reference to FIG. 4.

In operations 126 and 128, information required to perform the hole recovery with respect to the hole within each output image may be generated using the hole map, the reference viewpoint image, and the reference viewpoint disparity information.

In operation 130, an output viewpoint image or a target viewpoint image may be generated using the at least one input view.

An output viewpoint may indicate a target viewpoint to be provided to a viewer.

The output viewpoint image may include a hole.

In operation 140, hole recovery with respect to the hole within the output viewpoint image may be performed using the reference layer and disparity information of the reference layer.

In operation 150, the output viewpoint image in which the hole recovery has been performed may be output.

A plurality of output viewpoint images in which holes have been restored may then be provided.

FIG. 2 illustrates a diagram to describe a method of determining a reference viewpoint based on two input views and generating an image and a disparity with respect to the reference viewpoint according to an embodiment.

FIG. 2 illustrates a first input view 210 and a second input view 220.

The first input view 210 and the second input view 220 may be a left input view and a right input view, for example, of a stereo 2-way view input, respectively.

The first input view 210 and the second input view 220 may alternatively be an $n^{th}$ input view and an $(n+1)^{th}$ among 2n input views of a multi-view device, respectively. Here, n may be an integer greater than or equal to "1". The first input view 210 and the second input view 220 may be two input views that are positioned at the center among input views. That is the first input view 210 and the second input view 220 may be positioned between other input views.

The first input view 210 may include an image 212 and disparity information 214.

The second input view 220 may include an image 222 and disparity information 224.

A reference viewpoint may be centered between a viewpoint of the first input view 210 and a viewpoint of the second input view 220. The reference viewpoint may be a centered between viewpoints of two input views that are selected from among all of the input views.

As one example, a reference viewpoint view 230, that is, a reference viewpoint image 232 and reference viewpoint disparity information 234 may be generated based on the first input view 210 corresponding to a left input view and the second input view 220 corresponding to a right input view.

As another example, the reference viewpoint view 230, that is, the reference viewpoint image 232 and reference viewpoint disparity information 234 may be generated by performing warping using the image 212 and the disparity information 214 of the first input view 210 and the image 222 and the disparity information 224 of the second input view 220.

FIG. 3 illustrates a diagram to describe a method of determining a reference viewpoint based on (2n+1) input views, and generating an image and a disparity with respect to the reference viewpoint according to an embodiment.

FIG. 3 shows three input views, for example, a first input view 310, an $n^{th}$ input view 320, and a $(2n+1)^{th}$ input view 330.

The number of input views may be 2n + 1. Here, n may indicate an integer greater than or equal to "0".

The $n^{th}$ input view 320 corresponding to a center input view may include an image 322 and disparity information 324.

A reference viewpoint may be a viewpoint of an input view that is positioned among the input views. For example, among (2n+1) input views, a viewpoint of the $n^{th}$ input view 320 may be the reference viewpoint.

When the reference viewpoint is identical to a viewpoint of a predetermined view among input views, the predetermined view may be set or be used as a reference viewpoint view 340. An image of the predetermined view may be set as a reference viewpoint image 342, and disparity information of the predetermined view may be set as reference viewpoint disparity information 344.

For example, when the reference viewpoint is a viewpoint of the input view 320, the input view 320 may be set as the reference viewpoint view 340.

When the number of input views is an odd number, for example, (2n + 1), the image 322 of the input view 320 positioned on the center, for example, the $n^{th}$ input view may be set as the reference viewpoint image 342. The disparity information 324 of the input view 320 may be set as the reference viewpoint disparity information 344.

FIG. 4 illustrates a diagram to describe a process of generating an initial reference layer and disparity information of the initial reference layer and a reference layer and disparity information of the reference layer using a reference viewpoint image and reference viewpoint disparity information according to an embodiment. The process of FIG. 4 could be used, for example, in the generation of multiple views.

As described above with reference to FIG. 1 through FIG. 3, a reference viewpoint image 430 and reference viewpoint disparity information 435 may be generated based on at least one input view, for example, input views 410 and 415.

A reference viewpoint view 420 may include the reference viewpoint image 430 and the reference viewpoint disparity information 435.

The reference viewpoint image 430 may include a foreground 432 and a background 434. In general, the foreground 432 may have a greater disparity, for example, a smaller depth than the background 434.

The reference viewpoint disparity information 435 may include foreground disparity information 436 associated with the foreground 432 and background disparity information 438 associated with the background 434.

A hole map 440 may correspond to data obtained by aggregating a hole generated in each multi-view image on the reference viewpoint and may include hole portions 442 and 444 and a non-hole portion 446.

The hole map 440 may be a binary map in which the hole portions 442 and 444 are expressed as "0" and the non-hole portion 446 is expressed as "1 ".

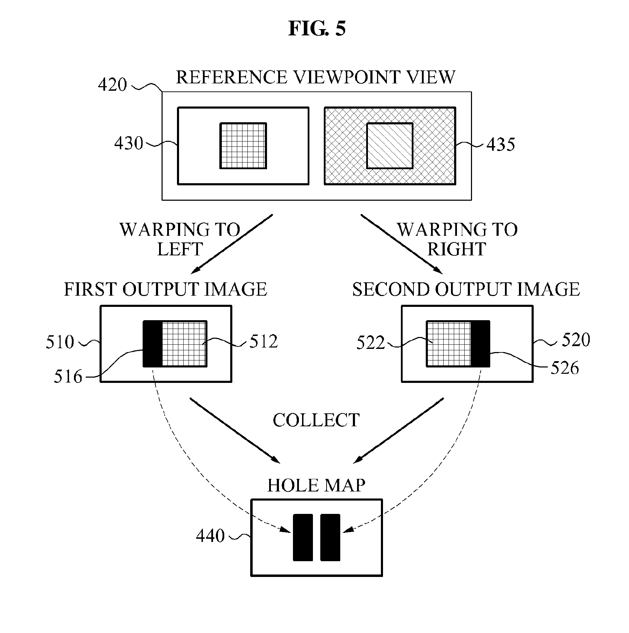

An example of generating the hole map 440 will be further described later with reference to FIG. 5 through FIG. 8.

An initial reference layer 450 may correspond to an image obtained by processing an area indicated as a hole on the hole map 440 and may include an image 460 and disparity information 470.

The image 460 of the initial reference layer 450 may include a foreground 462, a background 464, and holes 466 and 468.

The image 460 of the initial reference layer 450 may be generated based on the reference viewpoint image 430 and the hole map 440. For example, the holes 466 and 468 may correspond to the hole portions 442 and 444 of the reference viewpoint image 430. The foreground 462 or the background 464 may correspond to the non-hole portion 446 of the reference viewpoint image 430.

The disparity information 470 of the initial reference layer 450 may be reference viewpoint disparity information 435. Alternatively, the disparity information 470 of the initial reference layer 450 may be generated based on reference viewpoint disparity information 435 and the hole map 440. For example, the disparity information 470 may include foreground disparity information 472 corresponding to the foreground 462, background disparity information 474 corresponding to the background 464, and holes 476 and 478.

The image 460 of the initial reference layer 450 may be generated by performing an AND operation between the reference viewpoint image 430 and the hole map 440. By performing the AND operation, the holes 466 and 468 may correspond to "0", for example, and to the hole portions 442 and 444 of the hole map 440 in the reference viewpoint image 430. In the reference viewpoint image 430, a portion corresponding to "1", for example, the non-hole portion 446 of the hole map 440 may not be affected by the AND operation. Therefore, the portion may be continuously maintained as the foreground 462 or the background 464 even after the AND operation is performed.

That is, the reference viewpoint image 430 may be used "as is" with respect to the foreground 462 and the background 464 corresponding to the non-hole portion 446 in the image 460 of the initial reference layer 450. Meanwhile, the holes 466 and 468 in the image 460 may correspond to the hole portions 442 and 444. Alternatively, reference viewpoint disparity information 435 may be used as is with respect to the foreground disparity information 472 and the background disparity information 474 corresponding to the non-hole portion 446 in the disparity information 470 of the initial reference layer 450. The areas corresponding to the hole portions 442 and 444 in the disparity information 470 may be the holes 476 and 478.

A reference layer 480 in which all of the holes have been filled may be generated through a hole recovery process with respect to the image 460 of the initial reference layer 450. The reference layer 480 may include an image 490 and disparity information 495. The image 490 and the disparity information 495 typically do not include a hole, since the holes may have been filled through the hold recovery process.

A hole within the initial reference layer 450 may be filled using, for example, inpainting, hole filling, and the like.

For example, a hole recovery with respect to the hole within the initial reference layer 450 may be performed using a background portion that is adjacent to the hole. For example, the hole 466 or 468 within the image 460 of the initial reference layer 450 may be filled using information, for example, a color of a portion of the background 464 adjacent to the hole 466 or the 468. The hole 476 or 478 within the disparity information 470 of the initial reference layer 450 may be filled using a disparity of a portion adjacent to the hole 476 or the 478 in the background disparity information 474.

For example, the hole recovery with respect to the hole within the initial reference layer 450 may be performed using a different viewpoint input view, for example, and image and disparity information of a different input view.

Because the reference layer is saved continuously, the hole recovery with respect to the hole within the initial reference layer 450 may be performed using a temporally preceding reference layer, for example, using an image and disparity information of the temporally preceding reference layer. The temporally preceding reference layer may correspond to a previous frame of image data, for example.

The hole recovery with respect to the hole within the disparity information 495 of the initial reference layer may be performed by spreading a disparity of a background around the hole.

FIG. 5 illustrates a diagram to describe a principle of generating a hole map according to an embodiment.

A hole within an output image may occur due to a difference between disparities of adjacent areas within a reference viewpoint image, for example, a left pixel and a right pixel that are adjacent to each other.

When a corresponding pixel has a greater disparity than a left pixel of the pixel, for example, when $\Delta d_L$, which is a value obtained by subtracting a disparity of the left pixel from a disparity of the pixel, is greater than "0" a hole may occur left of the pixel within an output image that is warped from a reference viewpoint to the left.

When the pixel has a greater disparity than a right pixel of the pixel, for example, when $\Delta d_R$, which is a value obtained by subtracting a disparity of the right pixel from the disparity of the pixel, is greater than "0" a hole may occur right of the pixel within an output image that is warped from the reference viewpoint to the right.

A first output image 510 may be generated by warping the reference viewpoint view 420 or the reference viewpoint image 430 to the left. A hole 516 corresponding to $\Delta d_L$, for example, 20 pixels may occur in the left of a foreground 512 within the first output image 510. A second output image 520 may be generated by warping the reference viewpoint view 420 to the right. A hole 526 corresponding to $\Delta d_R$, for example, 20 pixels may occur in the right of a foreground 522 within the second output image 520.

Therefore, a hole area occurring within an output image of a predetermined viewpoint may be predicted by analyzing a disparity difference between adjacent pixels within the reference viewpoint view 420.

The hole map 440 may be configured by collecting or aggregating, as a reference viewpoint image, holes that occur by warping the reference viewpoint view 420 to a predetermined viewpoint.

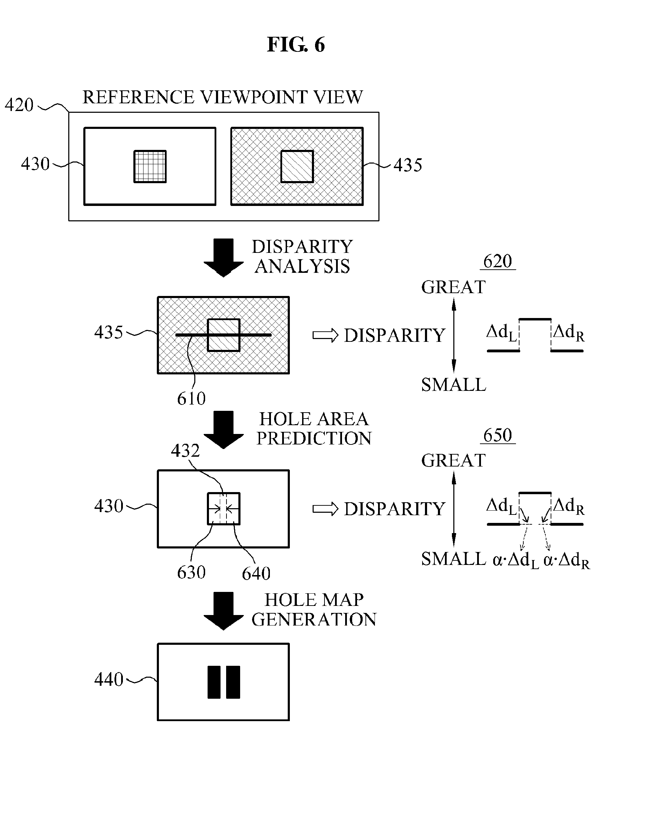

FIG. 6 illustrates a diagram to describe a method of generating a hole map according to an embodiment.

To predict a hole area that may occur when generating at least one output view, such as in a multi-view image, a disparity difference between pixels within the reference viewpoint view 420 may be calculated.

The disparity difference may include a left difference $\Delta d_L$ and a right difference $\Delta d_R$. The left difference may be a difference with respect to a pixel (hereinafter, left pixel) adjacent to the left of the pixel. The right difference may be a difference with respect to a pixel (hereinafter, right pixel) adjacent to the right of the pixel.

A disparity of a predetermined horizontal line 610 within the reference viewpoint disparity information 435 is expressed as graph 620.

An area occluded by the foreground 432 within the reference viewpoint image 430 may be determined as a hole area based on the disparity difference, as shown in the graph 620.

The area occluded by the foreground 432 may be calculated based on 1) a left disparity difference, 2) a right disparity difference, 3) an input baseline between input views, and 4) a distance between viewpoints of outermost output views.

The hole map 440 may be generated based on the disparity difference, for example, $\Delta d_L$ and $\Delta d_R$, between pixels within the reference viewpoint image 430.

Hereinafter, an example of determining an area occluded by a foreground, for example, pixels set as a hole will be described.

When a first disparity of a first pixel is greater than a second disparity of a second pixel adjacent to the left of the first pixel by at least a threshold, for example, when $\Delta d_L$ of the first pixel is greater than the threshold, pixels from right of the first pixel may be set as a hole. The number of the pixels may correspond to $\alpha \cdot A d_L$. The number of pixels set as the hole may be proportional to a difference between the first disparity and the second disparity. Here, $\alpha$ denotes a constant.

When the first disparity of the first pixel is greater than a third disparity of a third pixel adjacent to right of the first pixel by at least a threshold, for example, when $\Delta d_R$ of the first pixel is greater than the threshold, pixels from left of the first pixel may be set as a hole. The number of the pixels may correspond to $\alpha \cdot \Delta d_R$. The number of pixels set as the hole may be proportional to the difference between the first disparity and the third disparity.

A first area 630 and a second area 640 may indicate a hole area, for example, an area determined to be occluded by the foreground 432, based on the disparity difference between the pixels.

A second graph 650 shows an example in which the first area 630 and the second area 640 are set or calculated in proportion to the difference $\Delta d_L$ or $\Delta d_R$, and $\alpha$.

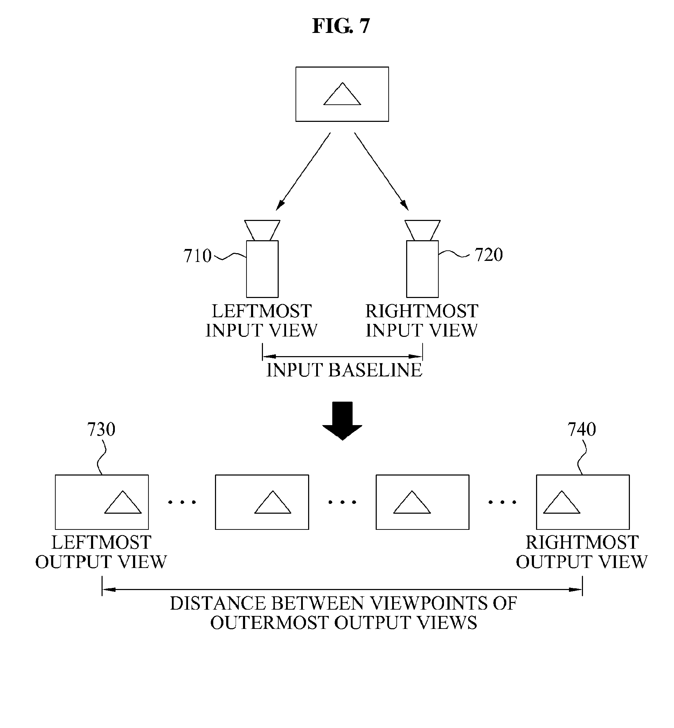

An example of calculating $\alpha$ will be further described with reference to FIG. 7.

An area set as a hole through duplication of at least one pixel may be stored as a single hole area.

FIG. 7 illustrates a diagram to describe a method of determining the number of pixels set as a hole according to an embodiment.

An input baseline may indicate a distance between a viewpoint of a leftmost input view 710 and a viewpoint of a rightmost input view 720 among input views.

A leftmost output view 730 may be an output view having a leftmost viewpoint among output views that are generated based on at least one input view. A rightmost output view 740 may be an output view having a rightmost viewpoint.

For example, α may be calculated according to Equation 1:

[Equation 1]

$$\alpha = \frac{\text{Distance between viewpoints of outermost output views}}{\text{Input baseline}}$$

For example, when a maximum distance between viewpoints of output views is double a maximum distance between viewpoints of input views, α may become "2".

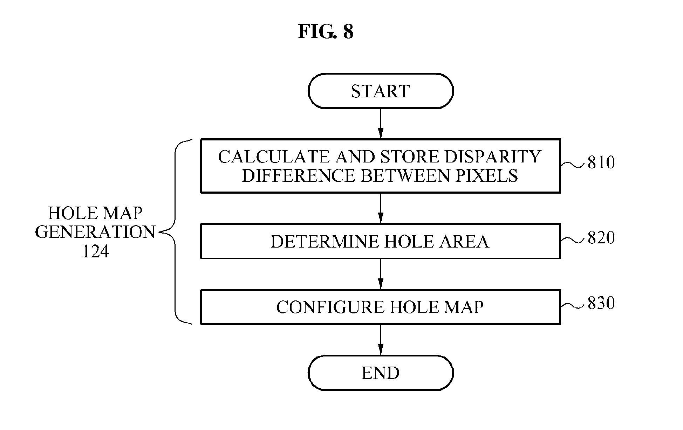

FIG. 8 illustrates a process of generating a hole map according to an embodiment.

Operation 124 of FIG. 1 may include operations 810 and 820 of the following hole map generating method.

As described above with reference to FIG. 4 through FIG. 6, the hole map 440 may be generated based on reference viewpoint disparity information.

In operation 810, a disparity difference, for example, a left difference $\Delta d_L$ and a right difference $\Delta d_R$, of each pixel within the reference viewpoint view 420 may be calculated and may be stored to predict a hole area that may occur when generating at least one output image.

In operation 820, an area occluded by a foreground may be determined as the hole area using the calculated difference disparity.

In operation 830, the hole map 440 may be configured using the area that is determined as the hole area. Operations 810-830 may be repeated using hole information for each viewpoint of multiple viewpoints, such as of a multi-view device.

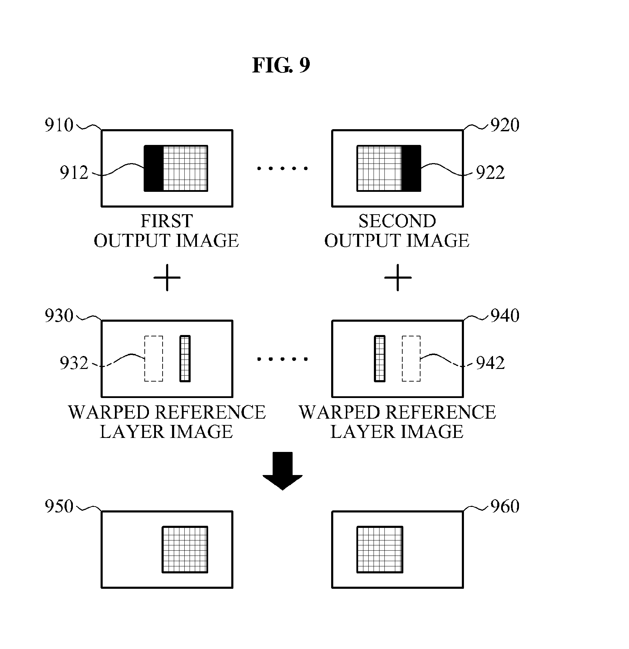

FIG. 9 illustrates a diagram to describe a principle of generating an output viewpoint image and performing a hole recovery with respect to a hole within the output viewpoint image according to an embodiment.

A first output image 910 and a second output image 920 may be generated using at least one reference view.

Here, the reference view may be a view that is selected to generate a predetermined output image of at least one input view. For example, when an output image is generated by interpolation, two input views most proximate to the left and right of a viewpoint of the output image may be selected as reference views. When an output image is generated by extrapolation, an input view, for example, an outermost view, most proximate to the viewpoint of the output image may be selected as a reference view.

For example, a reference view of the first output image 910 may correspond to the input view 410 of FIG. 4, and a reference view of the second output image 920 may correspond to the input view 415 of FIG. 4.

The first output image 910 may be generated by warping an image of the reference view(s) to a viewpoint of the first output image 910 using disparity information of the reference view(s). The second output image 920 may be generated by warping an image of the reference view(s) to a viewpoint of the second output image 920 using disparity information of the reference view(s).

Due to a difference between a viewpoint of at least one input view, for example, the input views 410 and 415, and a viewpoint of at least one output view, for example, the first output image 910 and the second output view 920, a hole such as hole 912 or hole 922 may be generated.

Reference layer images 930 and 940 of the output viewpoint may be generated for the first output image 910 and the second output image 920, respectively.

The reference layer images 930 and 940 may be generated by warping the image 490 of the reference layer 480 using disparity information 495 of the reference layer 480.

Warping of the reference layer 480 may be regarded as a way to spread information required for hole recovery within the reference layer 480 to each output viewpoint.

A hole recovery with respect to the hole 912 within the first output image 910 may be performed using the reference layer image 930 that is warped to the viewpoint of the first output image 910. An area 932 of the reference layer image 930 corresponding to the hole 912 may be used for the hole recovery.

An area 942 of the reference layer image 940 that is warped to the viewpoint of the second output image 920 may be used for a hole recovery with respect to the hole 922.

An output image 950 or 960 in which hole recovery has been performed may be generated by synthesizing the first output image 910 or the second output image 920 and the warped reference layer image 930 or 940.

The warped reference layer image 930 or 940 may be regarded as background information at the viewpoint of the output image 950 or 960. For example, the image 490 of the reference layer 480 may be used as a background of the first output image 950 or the second output image 960 by warping. Due to the above characteristic, the reference layer 480 may be referred to as a reference background layer. The initial reference layer 450 may be referred to as an initial reference background layer.

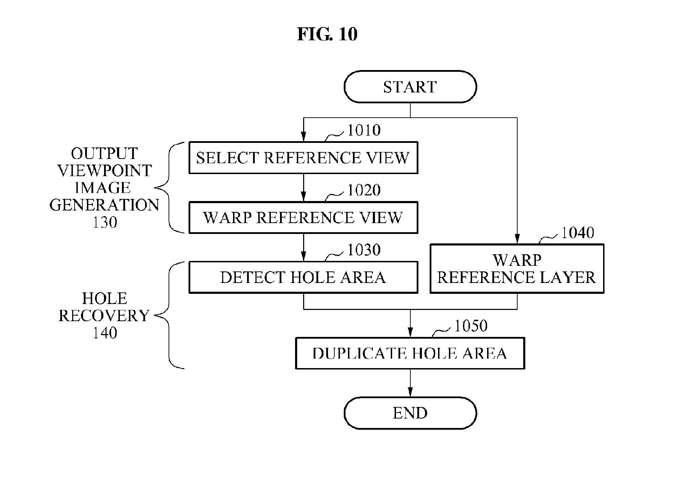

FIG. 10 illustrates a process of generating an output viewpoint image and performing a hole recovery with respect to a hole within the output viewpoint image according to an embodiment.

Operations 1010 through 1050 of FIG. 10 may be performed to generate a final output image at a predetermined output viewpoint.

Operation 130 of FIG. 1 may include operations 1010 and 1020.

In operation 1010, at least one reference view may be selected from at least one input view.

The at least one reference view may be selected to generate a predetermined output view from the at least one input view. When an output image is generated by extrapolation, a single input view may be selected as the reference view. When an output image is generated by interpolation, two input views may be selected as reference views.

In operation 1020, an output viewpoint image, for example, the first output image 910 or the second output image 920 may be generated by warping a reference view image to an output viewpoint of an output view using disparity information of the selected at least one reference view.

Operation 140 of FIG. 1 may include operations 1030, 1040, and 1050.

In operation 1030, the hole 912 of the first output image 910 or the hole 922 of the second output image 920 may be detected.

In operation 1040, the reference layer image 930 or 940 of the output viewpoint may be generated by warping the image 490 of the reference layer 480 to the output viewpoint using disparity information 495 of the reference layer 480.

In operation 1050, the area 932 or 942 of the reference layer image 930 or 940 corresponding to the hole 912 or 922 may be duplicated to the hole 912 or 922. That is, the hole recovery with respect to the hole 912 or 922 may be performed by duplicating information, for example, a color of the area 932 or 942 to the hole 912 or 922.

The hole recovery with respect to the hole 912 or 922 of the first output image 910 or the second output image 920 of the output viewpoint may be performed using information of the reference layer 480. For example, recovery of the hole 912 or 922 need not be performed independently for each viewpoint. The hole recovery with respect to the hole 912 or 922 may be performed by spreading the image 490 and the disparity information 495 of the reference layer 480 to the hole 912 or 922 within the first output image 910 or the second output image 920.

Visual inconsistency between output images therefore may be solved by performing the hole recovery with respect to holes within all of the output images based on view information at a reference viewpoint. In addition, instead of repeating a hole recovery process whereby the number of times corresponds to the number of generated images of the output viewpoint, the hole recovery may be performed only a single time, such as in operation 128, and thus, it is possible to decrease an operation repetition.

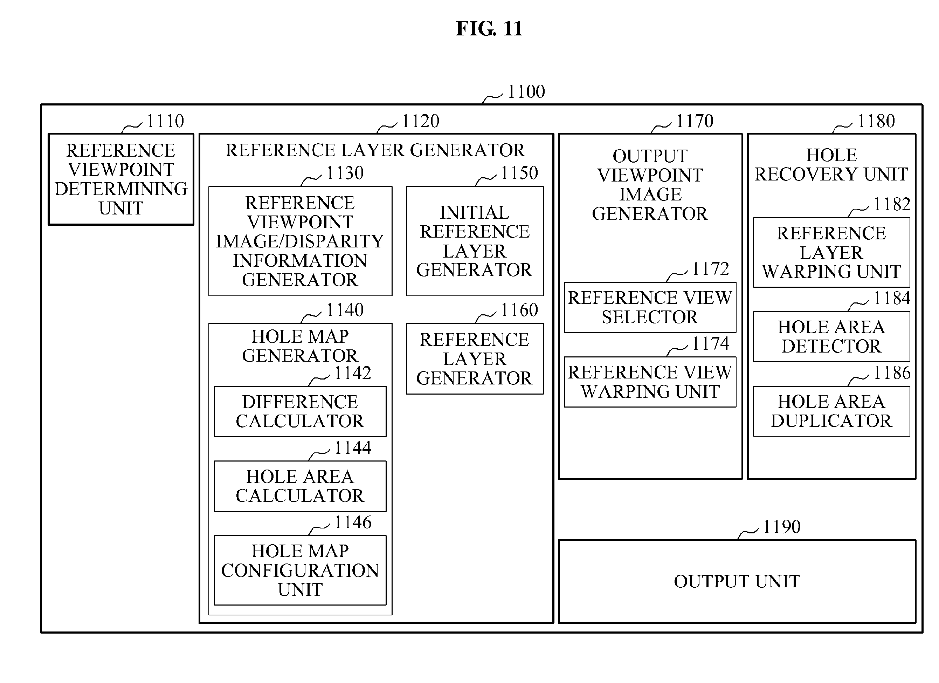

FIG. 11 illustrates a configuration of an image processing apparatus 1100 according to an embodiment.

Referring to FIG. 11, the image processing apparatus 1100 may include, for example, a reference viewpoint determining unit 1110, a reference layer generator 1120, an output viewpoint image generator 1170, a hole recovery unit 1180, and an output unit 1190.

An input of the image processing apparatus 1100 may include at least one input view. The image processing apparatus 1100 may output at least one output view or at least one output viewpoint image.

The reference viewpoint determining unit 1110 may perform operation 1100, and may determine a reference viewpoint. An input of the reference viewpoint determining unit 1100 may include at least one input view.

The reference layer generator 1120 may perform operations 122 through 128. The reference layer generator 1120 may generate the reference layer 480 about the reference viewpoint using at least one input view.

The output viewpoint image generator 1170 may perform operation 130. The output viewpoint image generator 1170 may generate an output viewpoint image, for example, the first output image 910 and the second output image 920, using the at least one input view.

The hole recovery unit 1180 may perform operation 140. The hole recovery unit 1180 may perform hole recovery with respect to a hole within the output viewpoint image, for example, the hole 912 of the first output image 910 or the hole 922 of the second output image 920, using the reference layer 480.

The reference layer generator 1120 may include a reference viewpoint image/disparity information generator 1130, a hole map generator 1140, an initial reference layer generator 1150, and a reference layer generator 1160.

The reference viewpoint image/disparity information generator 1130 may perform operation 122. The reference viewpoint image/disparity information generator 1130 may generate the reference viewpoint image 430 and reference viewpoint disparity information 435 using the at least one input view.

The hole map generator 1140 may perform operation 124. The hole map generator 1140 may generate the hole map 440 about the reference viewpoint. An input of the hole map generator 1140 may be the reference viewpoint disparity information 435. The hole map generator 1140 may output hole map 440, for example.

The initial reference layer generator 1150 may perform operation 126. The initial reference layer generator 1150 may generate the initial reference layer 450 using hole map 440, the reference viewpoint image 430, and the reference viewpoint disparity information 435.

The reference layer generator 1160 may perform operation 128. The reference layer generator 1160 may generate the reference layer by recovering a hole within the initial reference layer.

The hole map generator 1140 may include, for example, a difference calculator 1142, a hole area calculator 1144, and a hole map configuration unit 1146.

The difference calculator 1142 may perform operation 810. To predict a hole area that may occur when generating at least one output image, for example, the first output image 910 and the second output image 920, the difference calculator 1142 may calculate and store a disparity difference, for example, a left difference $\Delta d_L$ and a right difference $\Delta d_R$, of each pixel within the reference viewpoint view 420.

The hole area calculator 1144 may perform operation 820. The hole area calculator 1144 may determine, as a hole area, an area that is occluded by a foreground using the calculated disparity difference.

The hole map configuration unit 1146 may perform operation 830. The hole map configuration 1146 may configure the hole map 440 using the area that is determined as the hole area.

The output viewpoint image generator may include, for example, a reference view selector 1172 and a reference view warping unit 1174.

The reference view selector 1172 may perform operation 1010. The reference view selector 1172 may select at least one reference view from the at least one input view.

The reference view warping unit 1174 may generate an output viewpoint image, for example, the first output image 910 and the second output image 920, by warping a reference view image to an output viewpoint of an output view using disparity information of the selected at least one reference view. An input of the reference view warping unit 1174 may include a reference view or a portion of or all of the at least one input view. The reference view warping unit 1174 may output the output viewpoint image, for example, the first output image 910 and the second output image 920.

The hole recovery unit 1180 may include, for example, a reference layer warping unit 1182, a hole area detector 1184, and a hole area duplicator 1186.

The reference layer warping unit 1182 may perform operation 1040. The reference layer warping unit 1182 may generate the reference layer image 930 or 940 of the output viewpoint by warping the image 490 of the reference layer 480 to the output viewpoint using disparity information 495 of the reference layer 480. An input of the reference layer warping unit 1182 may include the reference layer 480. The reference layer warping unit 1182 may output the reference layer image of the output viewpoint, for example, the reference layer image 930 or 940.

The hole area detector 1184 may perform operation 1030. The hole area detector 1184 may detect a hole within the output image generated by the reference view warping unit 1174, for example, the hole 912 of the first output image 910 or the hole 922 of the second output image 920. An input of the hole area detector 1184 may include the output viewpoint image, for example, the first output image 910 or the second output image 920, and the reference layer image 930 or 940 of the output viewpoint.

The hole area duplicator 1186 may perform operation 1050. The hole area duplicator 1186 may duplicate, to the hole 912 or 922, the area 932 or 942 of the reference layer image 930 or 940 corresponding to the hole 912 or 922. An input of the hole area duplicator 1184 may be the output viewpoint image, for example, the first output image 910 or the second output image 920, and the reference layer image 930 or 940 of the output viewpoint. The hole area duplicator 1184 may output the output image 950 or 960 in which the hole recovery is performed, as a final image of the output viewpoint.

The relationship described among the aforementioned constituent elements is only an example. For example, the reference viewpoint image/disparity information generator 1130 may be included in the reference viewpoint determining unit 1110. The reference layer warping unit 1182 may be included in the output viewpoint image generator 1170.

Functions of the aforementioned constituent elements may be performed by a control unit (not shown). Here, the control unit may indicate a single chip or a plurality of chips, a processor, or a core. Each of the constituent elements may indicate a function, a library, a service, a process, a thread, or a module that is performed by the control unit.

The technical description made above with reference to FIG. 1 through FIG. 10 may be applicable as is to the present embodiment and thus, further description will be omitted here.

The image processing method according to the above-described embodiments may be recorded in non-transitory computer-readable media including program instructions to implement various operations embodied by a computer. The media may also include, alone or in combination with the program instructions, data files, data structures, and the like. Examples of non-transitory computer-readable media include magnetic media such as hard disks, floppy disks, and magnetic tape; optical media such as CD ROM disks and DVDs; magneto-optical media such as optical discs; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described embodiments, or vice versa.

Any one or more of the software modules described herein may be executed by a controller such as a dedicated processor unique to that unit or by a processor common to one or more of the modules. The described methods may be executed on a general purpose computer or processor or may be executed on a particular machine such as the image processing apparatus described herein.

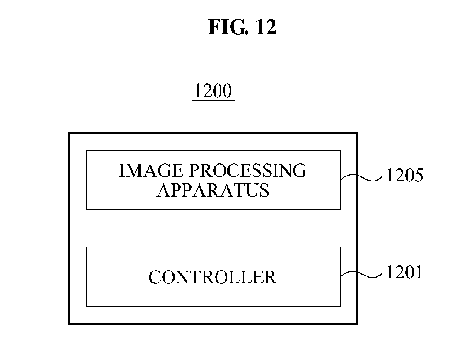

FIG. 12 illustrates a multi-view display device 1200 including an image processing apparatus according to example embodiments.

Referring to FIG. 12, the multi-view display device 1200 may include, for example, a controller 1201 and an image processing apparatus 1205.

The multi-view display device 1200 may be in the form of a 3D display for displaying a 3D image and may employ a multi-view scheme to output two or more different viewpoints. Examples of a 3D display may include a tablet computing device, a portable gaming device, a 3D television display or a portable 3D monitor such as in a laptop computer.

The controller 1201 may generate one or more control signals to control the multi-view display device 1200 and to be displayed by the multi-view display device 1200. The controller 1201 may include one or more processors.

The image processing apparatus 1205 may be used to generate a multi-view image for the multi-view display device 1200 and may correspond, for example, to the image processing apparatus 1100 as illustrated in FIG. 11. Thus, image processing apparatus 1205 may include, for example, a reference viewpoint determining unit 1110, a reference layer generator 1120, an output viewpoint image generator 1170, a hole recovery unit 1180, and an output unit 1190. Although not shown in FIG. 12, each of these units may correspond to similarly named units discussed herein, for example with respect to FIG. 11, and therefore need not be discussed further here.

The image processing apparatus 1205 may be installed internally within the multi-view display device 1200, may be attached to the multi-view display device 1200, or may be separately embodied from the multi-view display device 1200. Regardless of its physical configuration, the image processing apparatus 1205 has all of the capabilities discussed herein. The image processing apparatus 1205 may include one or more internal processors or may be controlled by the one or more processors included within the multi-view display device 1200 such as the one or more processors of controller 1201.

Although embodiments have been shown and described, it would be appreciated by those skilled in the art that changes may be made in these embodiments without departing from the principles and spirit of the disclosure, the scope of which is defined by the claims and their equivalents.

**Claims**

1. An image processing method, comprising:

   generating, using a processor, a reference layer about a reference viewpoint using at least one input view;
   generating an output viewpoint image using the at least one input view; and
   performing a hole recovery with respect to a hole within the output viewpoint image using the reference layer.

2. The method of claim 1, wherein each input view comprises an image and disparity information, and the generating of the reference layer comprises generating an image of the reference layer and disparity information of the reference layer.

3. The method of claim 1, wherein:

   the at least one input view comprises a left input view and a right input view; and
   the reference viewpoint comprises a viewpoint between a viewpoint of the left input view and a viewpoint of the right input view.

4. The method of claim 1, wherein the reference viewpoint comprises a viewpoint of a center input view in the at least one input view.

5. The method of claim 1, wherein the generating of the reference layer comprises:

   generating a reference viewpoint image and reference viewpoint disparity information using the at least one input view;
   generating a hole map about the reference viewpoint in which information associated with a hole within each output viewpoint image is collected;
generating an initial reference layer using the hole map, the reference viewpoint image, and the reference viewpoint disparity information; and
generating the reference layer by performing a hole recovery with respect to a hole within the initial reference layer.

6. The method of claim 5, comprising generating the hole map based on a difference between disparities of pixels included in the reference viewpoint image.

7. The method of claim 5, wherein an image of the initial reference layer is generated by performing an AND operation between the reference viewpoint image and the hole map.

8. The method of claim 5, wherein the hole recovery with respect to the hole within the initial reference layer is performed using a background adjacent to the hole.

9. The method of claim 5, wherein:

when a first disparity of a first pixel is greater than a second disparity of a second pixel adjacent to a left of the first pixel by at least a first threshold, pixels starting from a right of the first pixel are set as the hole and the number of the pixels is proportional to a difference between the first disparity and the second disparity, and
when the first disparity of the first pixel is greater than a third disparity of a third pixel adjacent to the right of the first pixel by at least a second threshold, pixels starting from the left of the first pixel are set as the hole and the number of the pixels is proportional to a difference between the first disparity and the third disparity.

10. The method of claim 2, wherein the generating of the output viewpoint image comprises:

selecting at least one reference view from the at least one input view; and
generating the output viewpoint image by warping a reference view image to an output viewpoint using reference view disparity information, and
wherein the performing of the hole recovery comprises:

generating a reference layer image of the output viewpoint by warping the reference layer image to the output viewpoint using the disparity information of the reference layer; and
duplicating, to the hole, an area corresponding to the hole in the reference layer image of the output viewpoint.

11. A non-transitory computer-readable medium comprising a program for instructing a computer to perform the method of any one of the preceding claims.

12. An image processing apparatus, comprising:

a reference layer generator arranged to generate a reference layer about a reference viewpoint using at least one input view;
an output viewpoint image generator arranged to generate an output viewpoint image using the at least one input view; and
a hole recovery unit arranged to perform a hole recovery with respect to a hole within the output viewpoint image using the reference layer.

13. The image processing apparatus of claim 12, wherein each input view comprises an image and disparity information, and the reference layer generator is arranged to generate an image of the reference layer and disparity information of the reference layer.

14. The apparatus of claim 12 or 13, wherein the reference layer generator comprises:

a reference viewpoint image/disparity information generator arranged to generate a reference viewpoint image and reference viewpoint disparity information using the at least one input view;
a hole map generator arranged to generate a hole map about the reference viewpoint in which information associated with a hole within each output viewpoint image is collected;
an initial reference layer generator arranged to generate an initial reference layer using the hole map, the reference viewpoint image, and the reference viewpoint disparity information; and
a reference layer generator arranged to generate the reference layer by performing a hole recovery with respect to a hole within the initial reference layer.

**15.** The apparatus of claim 13, wherein the output viewpoint image generator comprises:

a reference view selector arranged to select at least one reference view from the at least one input view; and
a reference view warping unit arranged to generate the output viewpoint image by warping a reference view image to an output viewpoint using the reference view disparity information, and
wherein the hole recovery unit comprises:

a reference layer warping unit arranged to generate a reference layer image of the output viewpoint by warping the reference layer image to the output viewpoint using the disparity information of the reference layer; and
a hole area duplication unit arranged to duplicate, to the hole, an area corresponding to the hole in the reference layer image of the output viewpoint.

## FIG. 1

```
                          ┌──────────┐
                          │  START   │
                          └────┬─────┘
                               │
                               ▼
            ┌──────────────────────────────────────┐
            │   DETERMINE REFERENCE VIEWPOINT       │──110
            └──────────────────┬───────────────────┘
                               │
                               ▼
            ┌──────────────────────────────────────┐
            │   GENERATE REFERENCE VIEWPOINT        │
            │   IMAGE AND REFERENCE VIEWPOINT       │──122
            │   DISPARITY INFO                      │
            └──────────────────┬───────────────────┘
                               │
   REFERENCE                   ▼
   LAYER        ┌──────────────────────────────────────┐
   GENERATION   │   GENERATE HOLE MAP                   │──124
                └──────────────────┬───────────────────┘
                               │
                               ▼
            ┌──────────────────────────────────────┐
            │   GENERATE INITIAL REFERENCE LAYER    │──126
            └──────────────────┬───────────────────┘
                               │
                               ▼
            ┌──────────────────────────────────────┐
            │   GENERATE REFERENCE LAYER            │──128
            └──────────────────┬───────────────────┘
                               │
                               ▼
            ┌──────────────────────────────────────┐
            │   GENERATE OUTPUT VIEWPOINT IMAGE     │──130
            └──────────────────┬───────────────────┘
                               │
                               ▼
            ┌──────────────────────────────────────┐
            │   PERFORM HOLE RECOVERY WITH          │
            │   RESPECT TO HOLE WITHIN OUTPUT       │──140
            │   VIEWPOINT IMAGE                     │
            └──────────────────┬───────────────────┘
                               │
                               ▼
            ┌──────────────────────────────────────┐
            │   OUTPUT OUTPUT VIEWPOINT IMAGE       │──150
            └──────────────────┬───────────────────┘
                               │
                               ▼
                          ┌──────────┐
                          │   END    │
                          └──────────┘
```

# FIG. 2

210

212

214

FIRST INPUT VIEW

COLOR/
DISPARITY
INTERPOLATION

220

222

224

SECOND INPUT VIEW

232

234

230

REFERENCE
VIEWPOINT VIEW

## FIG. 3

# FIG. 4

INPUT VIEW

INPUT VIEW

REFERENCE VIEWPOINT VIEW

+

HOLE MAP

INITIAL REFERENCE LAYER

REFERENCE LAYER

# FIG. 5

420 ～ REFERENCE VIEWPOINT VIEW

430 ～

435

WARPING TO LEFT

WARPING TO RIGHT

FIRST OUTPUT IMAGE

SECOND OUTPUT IMAGE

510 ～

512

522 ～

520

516 —

526

COLLECT

HOLE MAP

440 ～

# FIG. 6

## FIG. 7

710 LEFTMOST INPUT VIEW

720 RIGHTMOST INPUT VIEW

INPUT BASELINE

730 LEFTMOST OUTPUT VIEW

740 RIGHTMOST OUTPUT VIEW

DISTANCE BETWEEN VIEWPOINTS OF OUTERMOST OUTPUT VIEWS

**FIG. 8**

```
                    ┌─────────────────┐
                    │      START      │
                    └─────────────────┘
                            │
                            ▼
        ┌───────────────────────────────────────┐
        │ CALCULATE AND STORE DISPARITY         │ ~810
        │ DIFFERENCE BETWEEN PIXELS             │
        └───────────────────────────────────────┘
                            │
                            ▼
        ┌───────────────────────────────────────┐
HOLE MAP│        DETERMINE HOLE AREA            │ ~820
GENERATION
   124  └───────────────────────────────────────┘
                            │
                            ▼
        ┌───────────────────────────────────────┐
        │         CONFIGURE HOLE MAP            │ ~830
        └───────────────────────────────────────┘
                            │
                            ▼
                    ┌─────────────────┐
                    │       END       │
                    └─────────────────┘
```

## FIG. 9

910 — FIRST OUTPUT IMAGE
912

920 — SECOND OUTPUT IMAGE
922

+ +

930 — WARPED REFERENCE LAYER IMAGE
932

940 — WARPED REFERENCE LAYER IMAGE
942

950

960

**FIG. 10**

**FIG. 11**

1100

1110 — REFERENCE VIEWPOINT DETERMINING UNIT

1120 — REFERENCE LAYER GENERATOR

1130 — REFERENCE VIEWPOINT IMAGE/DISPARITY INFORMATION GENERATOR

1150 — INITIAL REFERENCE LAYER GENERATOR

1140 — HOLE MAP GENERATOR

1142 — DIFFERENCE CALCULATOR

1144 — HOLE AREA CALCULATOR

1146 — HOLE MAP CONFIGURATION UNIT

1160 — REFERENCE LAYER GENERATOR

1170 — OUTPUT VIEWPOINT IMAGE GENERATOR

1172 — REFERENCE VIEW SELECTOR

1174 — REFERENCE VIEW WARPING UNIT

1180 — HOLE RECOVERY UNIT

1182 — REFERENCE LAYER WARPING UNIT

1184 — HOLE AREA DETECTOR

1186 — HOLE AREA DUPLICATOR

1190 — OUTPUT UNIT

EP 2 533 212 A1

**FIG. 12**

<u>1200</u>

```
┌─────────────────────────────────┐
│  ┌───────────────────────────┐  │
│  │    IMAGE PROCESSING       │ ─┼── 1205
│  │      APPARATUS            │  │
│  └───────────────────────────┘  │
│                                 │
│  ┌───────────────────────────┐  │
│  │      CONTROLLER           │ ─┼── 1201
│  └───────────────────────────┘  │
└─────────────────────────────────┘
```

Europäisches
Patentamt
European
Patent Office
Office européen
des brevets

**EUROPEAN SEARCH REPORT**

Application Number

EP 12 17 1078

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2010/037512 A1 (FRAUNHOFER GES FORSCHUNG [DE]; SMOLIC ALJOSA [DE]; MUELLER KARSTEN [DE) 8 April 2010 (2010-04-08) * page 8; figures 1a,1b,7 * | 1-15 | INV. G06T15/20 |
| X | KARSTEN MULLER ET AL: "Reliability-based generation and view synthesis in layered depth video", MULTIMEDIA SIGNAL PROCESSING, 2008 IEEE 10TH WORKSHOP ON, IEEE, PISCATAWAY, NJ, USA, 8 October 2008 (2008-10-08), pages 34-39, XP031356597, ISBN: 978-1-4244-2294-4 * pages 36-37; figures 1,7 * | 1-15 | |
| A | DONG TIAN ET AL: "View synthesis techniques for 3D video", APPLICATIONS OF DIGITAL IMAGE PROCESSING XXXII, 2 September 2009 (2009-09-02), pages 74430T-74430T-11, XP55041884, San Diego, CA DOI: 10.1117/12.829372 * section 4.4 * | 1-15 | TECHNICAL FIELDS SEARCHED (IPC) G06T H04N |
| A | FEHN C: "Depth-image-based rendering (DIBR), compression, and transmission for a new approach on 3D-TV", SPIE PROCEEDINGS, THE INTERNATIONAL SOCIETY FOR OPTICAL ENGINEERING - SPIE, BELLINGHAM, WASHINGTON, USA, vol. 5291, 31 May 2004 (2004-05-31), pages 93-104, XP002444222, ISSN: 0277-786X, DOI: 10.1117/12.524762 * page 100 * | 1-15 | |

-/--

The present search report has been drawn up for all claims

| Place of search | Date of completion of the search | Examiner |
|---|---|---|
| Munich | 24 October 2012 | Krawczyk, Grzegorz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Europäisches
Patentamt
European
Patent Office
Office européen
des brevets

Application Number

EP 12 17 1078

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ALJOSCHA SMOLIC ET AL: "Three-Dimensional Video Postproduction and Processing", PROCEEDINGS OF THE IEEE, IEEE. NEW YORK, US, vol. 99, no. 4, 1 April 2011 (2011-04-01), pages 607-625, XP011363624, ISSN: 0018-9219, DOI: 10.1109/JPROC.2010.2098350 * the whole document * ----- | 1-15 | |

TECHNICAL FIELDS
SEARCHED (IPC)

The present search report has been drawn up for all claims

| Place of search | Date of completion of the search | Examiner |
|---|---|---|
| Munich | 24 October 2012 | Krawczyk, Grzegorz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 12 17 1078

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2012

| Patent document cited in search report | Publication date | Patent family member(s) | Publication date |
|---|---|---|---|
| WO 2010037512 A1 | 08-04-2010 | CN 102239506 A | 09-11-2011 |
| | | EP 2327059 A1 | 01-06-2011 |
| | | JP 2012504805 A | 23-02-2012 |
| | | KR 20110059803 A | 03-06-2011 |
| | | US 2011261050 A1 | 27-10-2011 |
| | | WO 2010037512 A1 | 08-04-2010 |